# EUROPÄISCHE PATENTSCHRIFT

(11) **EP 2 004 464 B1**
(45) Veröffentlichungstag und Bekanntmachung des Hinweises auf die Patenterteilung: **25.08.2010**
(21) Anmeldenummer: 07723665.1
(22) Anmeldetag: 27.03.2007
(51) Int. Cl.: B60T 13/567, B60T 13/569

(54) **BREMSKRAFTVERSTÄRKUNGSEINRICHTUNG MIT DÄMPFUNGSELEMENT**
BRAKE BOOSTER DEVICE HAVING A DAMPING ELEMENT
DISPOSITIF DE SERVOFREIN AVEC ELEMENT D'AMORTISSEMENT

(30) Priorität: 07.04.2006 DE 102006016545
(43) Veröffentlichungstag der Anmeldung: 24.12.2008
(73) Patentinhaber: Lucas Automotive GmbH, 56070 Koblenz (DE)
(72) Erfinder: CALVO, José Manuel, 56642 Kruft (DE); GRIEBEL, Hans-Jürgen, 56220 Kettig (DE); ZEUNER, Lothar, 57518 Steineroth (DE)
(74) Vertreter: Thum, Bernhard
(86) Internationale Anmeldenummer: PCT/EP2007/002719
(87) Internationale Veröffentlichungsnummer: WO 2007/115684

(56) Entgegenhaltungen:
- WO-A-2005/019008
- DE-A1- 19 539 601
- FR-A1- 2 817 219

## Beschreibung

Die vorliegende Erfindung betrifft eine Bremskraftverstärkungseinrichtung für eine Fahrzeugbremsanlage mit einem Krafteingangsglied, einer über das Krafteingangslied betätigbaren Steuerventilanordnung, einer in einem Gehäuse angeordneten Kammeranordnung, die eine Unterdruckkammer und eine über eine bewegbare Wand von der Unterdruckkammer getrennte, wahlweise mit einer Unterdruckquelle oder der Atmosphäre verbindbare Arbeitskammer aufweist, und einem Kraftabgabeglied, wobei die bewegliche Wand mittels einer in dem Gehäuse zumindest teilweise aufgenommenen Rückstellfeder in eine Ausgangsstellung vorgespannt ist und wobei das Gehäuse von wenigstens einem Befestigungsbolzen durchsetzt ist.

Eine derartige Bremskraftverstärkungseinrichtung ist hinlänglich aus dem Stand der Technik bekannt. Man spricht auch oftmals von einem pneumatischen Bremskraftverstärker, bei dem an der beweglichen Wand über die Steuerventilanordnung bedarfsweise eine Druckdifferenz aufgebaut wird, die dann die von dem Fahrer auf das Bremspedal aufgebrachte Bremskraft verstärkt und so den Bremsvorgang unterstützt. Im Ergebnis muss der Fahrer für eine Bremsung weniger Kraft aufwenden, so dass auch Fahrer mit schwach ausgebildeter Beinmuskulatur in jeder Fahrsituation eine hinreichende Bremswirkung erzielen können.

Es hat sich jedoch gezeigt, dass sich insbesondere im Zuge fortschreitender Gewichtseinsparungen im Kraftfahrzeugbau, wodurch immer leichtere Teile eingesetzt werden, das Schwingungsverhalten einzelner Komponenten ungünstig ändert. Aufgrund der Verwendung massearmer Teile, insbesondere durch Verwendung von leichten Werkstoffen, wie beispielsweise Aluminium oder Magnesium oder diese Elemente enthaltenden Legierungen nimmt deren Schwingungstendenz zu. So hat sich gezeigt, dass beispielsweise bei Ausbildung der Bremsmechanik, Insbesondere des Bremspedals und des Pedalbocks aus derartig leichten Materialien, aufgrund der daraus resultierenden geringen Trägheit ein gewisse Schwingungsneigung in der Betätigungsmechanik entstehen kann, die dann zu unerwünschten Geräuschen führt. Aus FR 2 817 219 ist eine Anordnung nach dem Oberbegriff von Patentanspruch 1 bekannt, die diesem Problem begegnen soll. Hierzu wird auf die Rückstellfeder der Bremskraftverstärkungseinrichtung endseitig ein topfartiges Dämpfungselement aufgeschoben.

Es hat sich bei dieser Lösung jedoch wiederum gezeigt, dass die Fixierung des Dämpfungselements an der Rückstellfeder Probleme sowohl bei der Montage als auch im Betrieb verursachen kann, was letztendlich in einer Fehlfunktionen des Bremskraftverstärkers resultieren kann.

Aus dem Dokument DE 195 39 601 A1 ist eine weitere Bremskraftverstärkungseinrichtung bekannt, bei der ein innerer Gehäuseabschnitt des Bremskraftverstärkers, der die Rückstellfeder mit Spiel umgibt, mit einer gleitfähigen Kunststoffbeschichtung versehen ist.

Es ist demgegenüber eine Aufgabe der vorliegenden Erfindung, eine Bremskraftverstärkungseinrichtung der eingangs bezeichneten Art bereitzustellen, bei der die Schwingungsneigung erheblich reduziert ist und eine erleichternde fehlerfreie Montage bei gesteigerter Betriebssicherheit gewährleistet ist.

Diese Aufgabe wird durch eine Bremskraftverstärkungseinrichtung gelöst mit wenigstens einem Dämpfungselement, das zur Schwingungsdämpfung an der Rückstellfeder angreift, wobei das wenigstens eine Dämpfungselement an dem wenigstens einen Befestigungsbolzen angebracht ist.

Durch unmittelbares Angreifen an der Rückstellfeder kann das erfindungsgemäße Dämpfungselement die Erzeugung von Schwingungen unterdrücken, so dass auch entsprechende Schwingungen nicht an die Betätigungsmechanik übertragen werden können. Dadurch wird dem Problem unerwünscht auftretender Schwingungen bereits am Ursprung, das heißt bei der Entstehung derartiger Schwingungen begegnet. Die erfindungsgemäße Anbringung des Dämpfungselements an dem wenigstens einen Befestigungsbolzen sorgt für eine fehlerfreie Montage und für eine stabile Positionierung des Dämpfungselements über die gesamte Lebensdauer der Bremskraftverstärkungseinrichtung ohne die Gefahr eines unerwünschten Lösens oder einer unangebrachten Positionierung. Darüber hinaus ist gewährleistet, dass nicht etwa durch funktionsbedingte Bewegungen der Rückstellfeder eine unerwünschte Verlagerung des Dämpfungselements innerhalb des Gehäuses der Bremskraftverstärkungseinrichtung erfolgt.

Eine Weiterbildung der Erfindung sieht vor, dass das wenigstens eine Dämpfungselement an einem Umfangsbereich, vorzugsweise an einem Außenumfangsbereich, der Rückstellfeder schwingungsdämpfend angreift. Das Anbringen an dem Außenumfangsbereich der Rückstellfeder bietet den Vorteil einer besonders effektiven Schwingungsdämpfung. Es ist jedoch gleichermaßen auch möglich, an dem Innenumfangsbereich der Rückstellfeder anzugreifen, beispielsweise durch ein dämpfendes Rohrstück, das in den Innenumfangsbereich eingeführt ist und über eine Befestigungsplatte an dem wenigstens einen Befestigungsbolzen angebracht ist.

Gemäß einer Ausführungsvariante der Erfindung kann vorgesehen sein, dass das wenigstens eine Dämpfungselement zylindrisch, vorzugsweise hohlzylindrisch, insbesondere becherförmig, ausgebildet ist. So ist es möglich, ein einziges zylindrisches Dämpfungselement vorzusehen, das die Rückstellfeder umgibt. Gleichermaßen ist es aber auch möglich, einzelne Dämpfungselemente vorzusehen, wobei jedem Befestigungsbolzen ein Dämpfungselement zugeordnet ist. Dieses greift dann nur abschnittsweise an der zu dämpfenden Rückstellfeder an. So können die einzelnen Dämpfungselemente bei dieser Ausführungsvariante jeweils eine Aufnahmeöffnung aufweisen, mit der sie auf den jeweiligen Befestigungsbolzen aufgesteckt und an diesem fixiert sind. Die Erfindung sieht also vor, dass eine Mehrzahl von Dämpfungselementen um den Außenumfang der Rückstellfeder herum an einer korrespondierenden Mehrzahl von Befestigungsbolzen angeordnet ist. Alternativ hierzu kann vorgesehen sein, dass das wenigstens eine Dämpfungselement die Rückstellfeder über ihren gesamten Umfang umgibt, wie vorstehend bereits skizziert.

Hinsichtlich der Axialerstreckung kann vorgesehen sein, dass das wenigstens eine Dämpfungselement sich zumindest entlang eines Teils der axialen Länge der Rückstellfeder erstreckt. Selbstverständlich ist es auch möglich, dass sich das Dämpfungselement entlang der gesamten axialen Länge der Rückstellfeder erstreckt, hierbei muss das Dämpfungselement jedoch axial komprimierbar ausgebildet werden.

Um eine besonders gute Dämpfungswirkung zu erreichen, sieht eine Weiterbildung der Erfindung vor, dass im Bereich der Enden der Rückstellfeder jeweils wenigstens ein Dämpfungselement angeordnet ist.

Hinsichtlich der Materialwahl des Dämpfungselements kann erfindungsgemäß vorgesehen sein, dass es aus einem elastisch deformierbaren Material, insbesondere einem Gummi- oder Schaumstoffmaterial, hergestellt ist.

Eine alternative Ausführungsvariante der Erfindung sieht vor, dass das wenigstens eine Dämpfungselement scheibenförmig ausgebildet ist und sich zwischen Windungen der Rückstellfeder hinein erstreckt. Statt an dem Außenumfangsbereich der Rückstellfeder anzugreifen verhindert das Dämpfungselement Schwingungen, indem es zwischen einzelne Federwindungen der Rückstellfeder eingreift und so schwingungsdämpfend an diesen angreift. Insbesondere bei dieser Ausführungsform können mehrere derartige scheibenförmige Dämpfungselemente verwendet werden.

Eine vorteilhafte Ausführungsvariante, die sich insbesondere hinsichtlich ihres geringen Gewichts auszeichnet, sieht vor, dass das wenigstens eine Dämpfungselement einen zylindrischen Dämpfungskörper und wenigstens eine mit diesem verbundene Befestigungsscheibe aufweist. So kann der Dämpfungskörper relativ dünnwandig ausgebildet sein, was im Regelfall eine hinreichende Dämpfung bietet. Die Befestigung zu dem Befestigungsbolzen erfolgt dann über die ebenfalls dünnwandige Befestigungsscheibe. Zur Gewichtseinsparung lässt sich somit eine Ausbildung des einen oder mehrerer Dämpfungselemente aus Vollmaterial vermeiden. In diesem Zusammenhang kann vorgesehen sein, dass das wenigstens eine Dämpfungselement - in einem achsenthaltenden Schnitt betrachtet - ein U-Profil aufweist. Bei einer Ausbildung des Dämpfungselements aus einem U-Profil sieht dieses beispielsweise einen rohrförmigen Dämpfungskörper vor sowie zwei Befestigungsscheiben, die sich orthogonal zur Längsrichtung des rohrförmigen Dämpfungskörpers erstrecken und zur Befestigung an dem Befestigungsbolzen dienen. Verwendet man lediglich eine Befestigungsscheibe pro Dämpfungselement, so kann vorgesehen sein, dass das wenigstens eine Dämpfungselement - in einem achsenthaltenden Schnitt betrachtet - ein T-Profil aufweist. Dies bedeutet, dass die Dämpfungsscheibe dann etwa im Zentrum des rohrförmigen Körpers orthogonal zu dessen Längsrichtung verlaufend angeordnet ist. Dämpfungselement und Befestigungsscheibe können einstückig miteinander ausgebildet sein, sie können aber auch gleichermaßen miteinander verklebt oder aneinander anvulkanisiert sein. Darüber hinaus ist festzuhalten, dass auch L-Profile oder unsymmetrische Profile Anwendung finden können.

Die Erfindung betrifft ferner ein Dämpfungselement mit den vorstehend beschriebenen Merkmalen zum Einsatz in einer Bremskraftverstärkungseinrichtung der vorstehen beschriebenen Art. Zur Vermeidung von Wiederholungen werden die vorstehend ausführlich geschilderten Dämpfungselementmerkmale hier nicht nochmals erwähnt.

Die Erfindung wird im Folgenden anhand der beiliegenden Figuren erläutert. Es stellen dar:
- Fig.1: einen achsenthaltenden Schnitt einer erfindungsgemäßen Bremskraftverstär- kungseinrichtung mit dem Dämpfungselementen in einer ersten Ausfüh- rungsform der Erfindung;
- Fig.2: ein becherförmig ausgebildetes Dämpfungselement in Vorderansicht;
- Fig.3: ein aus Vollmaterial hergestelltes zylindrisches Dämpfungselement in Vorder- ansicht;
- Fig.4: eine Ansicht entsprechend Fig.1 einer zweiten Ausführungsform der Erfindung;
- Fig.5: das in Fig.4 verwendete Dämpfungselement in Vorderansicht;
- Fig.6: eine Fig.1 und 4 entsprechende Schnittansicht einer dritten Ausführungsvari- ante der Erfindung;
- Fig.7: das bei der Ausführungsform gemäß Fig.6 verwendete Dämpfungselement in Vorderansicht;
- Fig.8: eine Fig.1, 4 und 6 entsprechende Schnittansicht einer vierten Ausführungs- form der Erfindung und
- Fig.9: eine Vorderansicht des bei der vierten Ausführungsform gemäß Fig.8 verwen- deten Dämpfungselements.

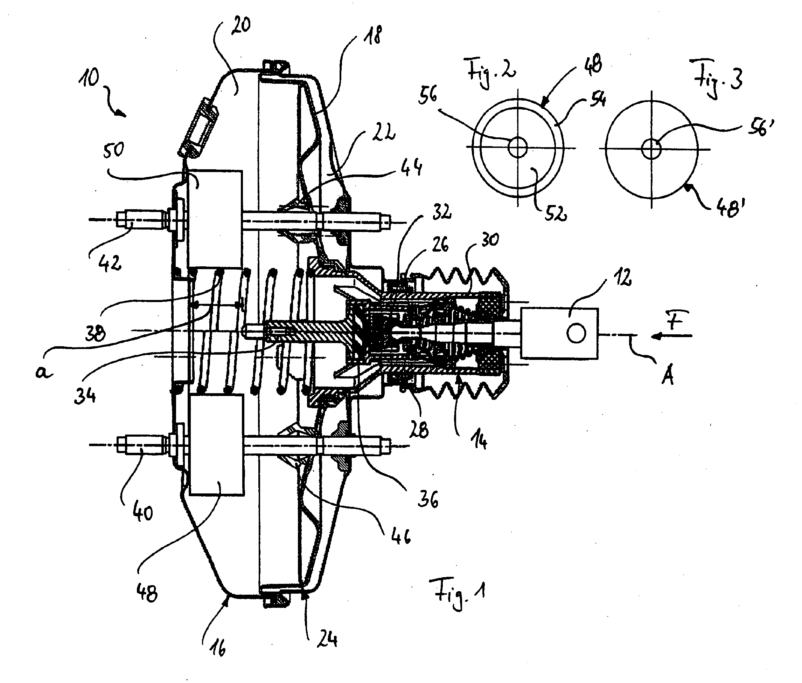

In Fig.1 ist ein erfindungsgemäßer Bremskraftverstärker allgemein mit 10 bezeichnet. Dieser umfasst ein Krafteingangsglied 12, eine Steuerventilanordnung 14, die mit dem Krafteingangsglied gekoppelt ist und ein Gehäuse 16. In dem Gehäuse 16 ist eine bewegliche Wand 18 angeordnet, die eine Unterdruckkammer 20 dichtend von einer Arbeitskammer 22 abtrennt. Die beiden Kammern 20 und 22 bilden eine Kammeranordnung 24. Das Steuerventil 14 enthält zwei Ventilsitze 26 und 28, die einem Steuerventilgehäuse 30 und einem Steuerventilelement 32 zugeordnet sind. Dem Steuerventil 14 ist ein Kraftausgangsglied 34 zugeordnet, dass über ein gummielastisches Reaktionsglied 36 mit dem Steuerventilgehäuse gekoppelt ist.

In dem Gehäuse 16 ist eine Rückstellfeder 38 aufgenommen, die sich mit ihrem in Fig.1 linken Ende an der linken Gehäusewand abstützt und ihrem in Fig.1 rechten Ende an dem Steuerventilgehäuse 30 angreift. Wie man in Fig.1 erkennt, ist das Steuerventilgehäuse 30 fest mit der beweglichen Wand 18 zu einer gemeinsamen Bewegung entlang der Längsachse A gekoppelt. Bei einer solchen Bewegung gleitet die bewegliche Wand 18 über Dichtungselemente 44 und 46 abgedichtet auf den Befestigungsbolzen 40 und 42 ab.

Auf den Befestigungsbolzen 40, 42 sind jeweils Dämpfungselemente 48 und 50 angebracht, die im Wesentlichen zylindrisch ausgebildet sind. Die Dichtungselemente 48 und 50 sind derart dimensioniert, dass sie mit ihrem Außenumfang an einem Längenabschnitt a der Rückstellfeder 38 an deren Außenumfang angreifen.

Der erfindungsgemäße Bremskraftverstärker 10 funktioniert wie folgt:
In Folge einer Betätigung des Bremspedals mit einer Betätigungskraft F, wie in Fig.1 angedeutet, wird das Krafteingangsglied 12 entlang der Längsachse A in Fig.1 nach links verlagert. Dadurch öffnet sich in an sich bekannter Weise die Steuerventilanordnung, so dass die Arbeitskammer 22 vorübergehend mit der Umgebungsatmosphäre verbunden wird. Die Unterdruckkammer 20 wird konstant unter Unterdruck gehalten, indem sie beispielsweise mit einer Unterdruckquelle oder mit dem Ansaugtrakt des Fahrzeugs verbunden bleibt. In Folge der sich an der beweglichen Wand 18 aufbauenden Druckdifferenz wird diese in Fig.1 nach links gedrückt, so dass das Steuerventilgehäuse 30 mitgezogen wird, bis sich die Steuerventilanordnung 14 wieder schließt. Nun ist ein quasi-stationärer Zustand erreicht, bei dem eine bestimmte Bremswirkung aufrecht erhalten wird.

Nimmt der Fahrer die Pedalkraft wieder zurück und reduziert diese auf Null, so wird der Dichtsitz 26 geöffnet, wodurch ein Druckausgleich an der beweglichen Wand 18 stattfinden kann, in dem die Arbeitskammer 22 mit der Unterdruckkammer 20 verbunden wird. In Folge dessen bewegt sich bedingt durch die Rückstellfeder 38 bei Freigabe des Bremspedals die Anordnung in den in Fig.1 gezeigten Ausgangszustand zurück.

Bei diesem Vorgang aber auch beim Starten des Fahrzeugs, woraufhin sich in der Unterdruckkammer 20 ein Unterdruck aufbaut, kann die Feder 38 zu Schwingungen angeregt werden, die dann über das Steuerventilgehäuse 30 und das Krafteingangsglied 12 auf das nicht gezeigte Bremspedal übertragen werden können. Diese Schwingungen wurden bei herkömmlichen Bremssystemen in der Regel schnell aufgrund der Trägheit des Bremspedals und weiterer Komponenten abgebaut. Im Zuge der fortschreitenden Verwendung von in Leichtbauweise hergestellten Komponenten, wie beispielsweise einem aus Magnesium hergestellten Bremspedal, treten derartige Schwingungen jedoch stärker zum Vorschein und führen gelegentlich zu unangenehmen Geräuschen.

Die Erfindung sieht in diesem Zusammenhang vor, dass die an der Rückstellfeder 38 auftretenden Schwingungen unmittelbar bei Entstehung durch die Dämpfungselemente 48 und 50 gedämpft werden. Die Dämpfungselemente 48 und 50 sind hierzu aus einem gummielastischen Material, vorzugsweise aus einem elastomeren Schaumstoff, hergestellt und sorgen für eine wirkungsvolle Schwingungsdämpfung durch unmittelbares Angreifen am Außenumfang der Rückstellfeder 38.

Fig.2 zeigt beispielsweise ein Dämpfungselement 48 in Becherform. Dieses weist eine Bodenfläche 52 auf, an die ein hohlzylindrischer Abschnitt 54 angeformt ist. Im Zentrum ist die Bodenfläche 52 mit einer Befestigungsöffnung 56 ausgebildet. Bei der Montage kann das Dämpfungselement 48 einfach auf einen Befestigungsbolzen 42 aufgesetzt werden und wird über eine Übermaßpassung zwischen dem Befestigungsbolzen 42 und dem Befestigungsloch 56 oder durch zusätzliche Klemm- oder Verschraubungsmittel auf dem Befestigungsbolzen 42 lagestabil gehalten. Die gegenseitige Anlage der Außenumfangsbereiche von Rückstellfeder 38 und Dämpfungselementen 48 und 50 sorgt für eine zuverlässige Dämpfung der Schwingungen an der Rückstellfeder 38, auch wenn die Anlage sich nur über den Längenabschnitt a erstreckt.

Fig.3 zeigt eine alternative Ausführungsvariante für ein Dämpfungselement 48', das aus einem massiven Schaumstoffkörper zylindrisch ausgebildet ist und eine zentrale Befestigungsöffnung 56' aufweist. Die Funktionsweise dieses Dämpfungselements gleicht dem aus Fig.2. Das Dämpfungselement 48' gemäß Fig.3 zeigt ein gegenüber dem aus Fig.2 gesteigertes Dämpfungsverhalten, da der gesamte Umfangsbereich weniger stark deformiert als der dem Boden 52 ferne Bereich des Rohrabschnitts 54 bei der Ausführungsform gemäß Fig.2.

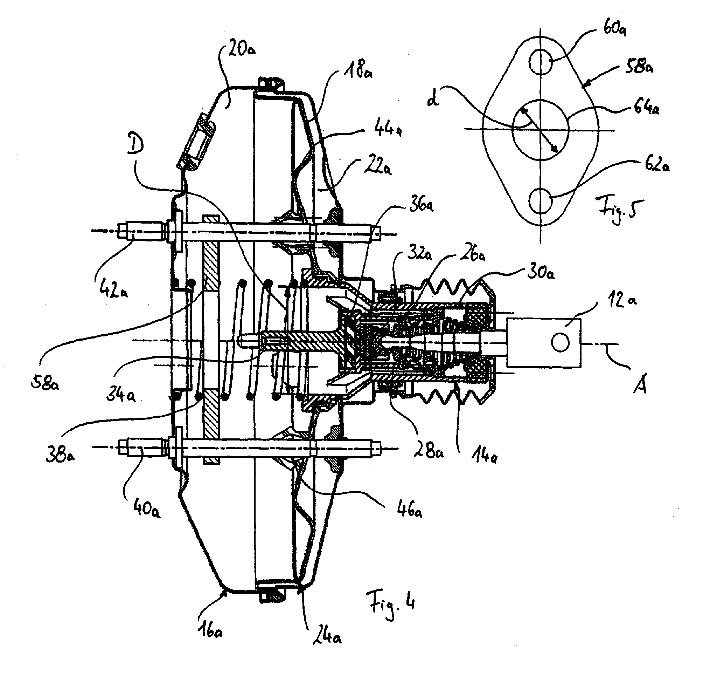

Fig.4 und 5 zeigen ein zweites Ausführungsbeispiel der erfindungsgemäßen Bremskraftverstärkungseinrichtung. Zur Vermeidung von Wiederholungen werden lediglich Unterschiede zum ersten Ausführungsbeispiel beschrieben, wobei für gleichartige oder gleichwirkende Komponenten dieselben Bezugszeichen wie beim ersten Ausführungsbeispiel verwendet werden, jedoch mit dem Kleinbuchstaben "a" nachgestellt.

Im Unterschied zu dem ersten Ausführungsbeispiel gemäß Fig.1 bis 3 ist bei dem zweiten Ausführungsbeispiel gemäß Fig.4 und 5 lediglich ein Dämpfungselement 58a vorgesehen, das in der Grundfläche rautenförmig mit abgerundeten Ecken ausgebildet ist, wie man in Fig.5 erkennt. Ferner erkennt man in Fig.5, dass das Dämpfungselement 58a zwei Befestigungsöffnungen 60a und 62a aufweist, sowie einen zentralen Durchbruch 64a. Die Befestigungsöffnungen 60a und 62a dienen zur Anbringung an den Befestigungsbolzen 40a und 42a. Der Durchmesser d des zentralen Durchbruchs 64a ist kleiner als der Innendurchmesser D der Rückstellfeder 38a. Der Innendurchmesser d ist jedoch groß genug, um das Kraftabgabeglied 34a und ein Kolbenende einer mit dem Kraftabgabeglied 34a gekoppelten, in den Figuren jedoch nicht gezeigten Hauptbremszylinderanordnung berührungsfrei aufzunehmen.

Aufgrund einer derartigen Dimensionierung des Innendurchmessers d des zentralen Durchbruchs 64a erstreckt sich das Dämpfungselement 58a zwischen zwei Windungen der Rückstellfeder 38a hinein und greift zumindest abschnittsweise auch an diesen an. Eine Schwingungsbewegung der Rückstellfeder 38a wird also in Folge der Berührung von Dämpfungselement 58a und Rückstellfeder 38a in diesen Windungsbereichen durch Reibung gedämpft. Das Dämpfungselement 58a ist, wie bereits ausgeführt, auf die Befestigungsbolzen 40a und 42a aufgeschoben und an diesen durch Übermaßpassung oder zusätzliche Klemmelemente fixiert. Ferner sei angemerkt, dass das Dämpfungselement 58a aus elastisch verformbarem Material ausgebildet ist, so dass es sich zum Einen dem Verlauf der Windungen anpassen kann und zum Anderen für eine hinreichende Dämpfung sorgen kann.

In einer Weiterbildung des Ausführungsbeispiels gemäß Fig.4 kann auch vorgesehen sein, dass mehrere Dämpfungselemente 58a in axialer Richtung auf die Befestigungsbolzen 40a und 42a aufgeschoben sind und zwischen axial aufeinanderfolgende Windungen jeweils eingreifen.

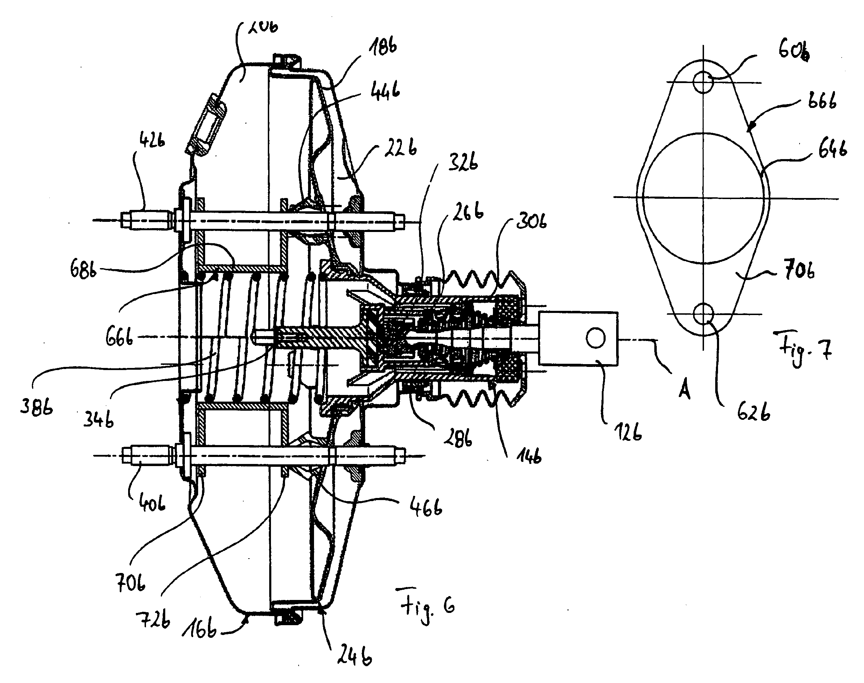

Fig.6 und 7 zeigen eine dritte Ausführungsvariante der Erfindung. Wiederum werden lediglich die Unterschiede zu der ersten und zweiten Ausführungsvariante der Erfindung unter Benutzung der selben Bezugszeichen für gleichartige und gleichwirkende Komponenten beschrieben, jedoch mit dem Kleinbuchstaben "b" nachgestellt.

Die Ausführungsform gemäß Fig.6 und 7 zeigt ein Dämpfungselement 66b, das aus einem rohrförmigen Dämpfungskörper 68b und zwei Befestigungsscheiben 70b und 72b besteht. Die beiden Befestigungsscheiben 70b und 72b sind an den jeweiligen axialen Enden des Dämpfungskörpers 68b angebracht. Wie man Fig.7 entnehmen kann, sind die Befestigungsscheiben 70b ebenfalls rautenförmig mit abgerundeten Kanten ausgebildet. Sie weisen jedoch einen relativ großen zentralen Durchbruch 74b auf, der in etwa dem Außendurchmesser der Rückstellfeder 38b entspricht. Genauer gesagt liegt der Dämpfungskörper 68b am Außenumfang der Rückstellfeder 38b an.

Die Ausführungsform gemäß Fig.6 und 7 zeichnet sich dadurch aus, dass sie über einen verhältnismäßig langen Axialbereich der Rückstellfeder 38b an deren Außenumfang anliegt und wirksam deren Schwingungen dämpfen kann. Durch die Bereitstellung zweier Befestigungsscheiben 80b und 72b lassen sich die gedämpften Schwingungen effizienter auf die Befestigungsbolzen 40b und 42b ableiten. Darüber hinaus wird durch die Bereitstellung zweier Befestigungsscheiben 70b und 72b eine stabile Anbringung des Dämpfungselements 66b in dem Gehäuse 16b gewährleistet. Man erkennt in der Schnittdarstellung gemäß Fig.6 einen U-profilförmigen Querschnitt des Dichtungselements 66b.

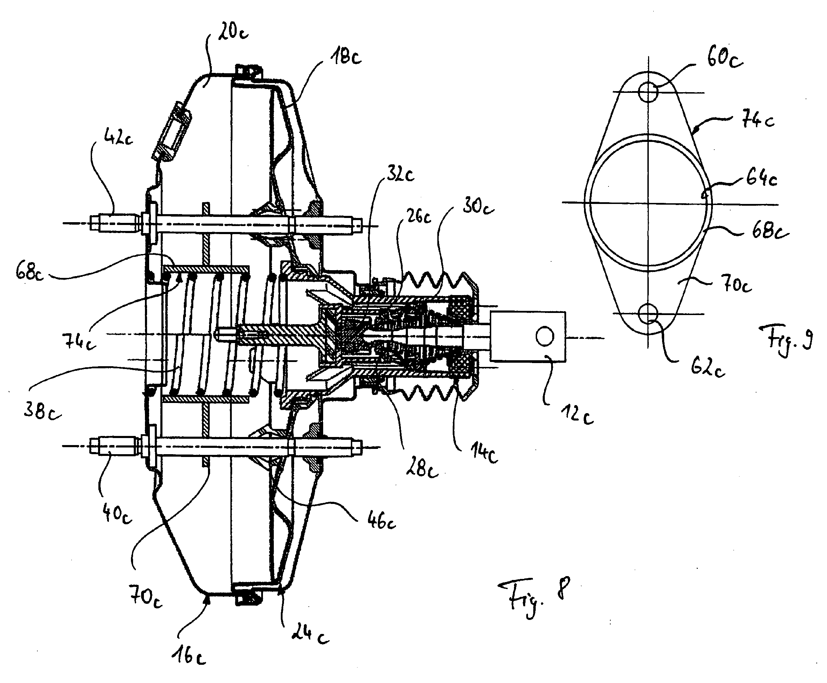

Schließlich zeigen Fig.8 und 9 ein weiteres Ausführungsbeispiel der Erfindung, wobei wieder dieselben Bezugszeichen wie vorangehend für gleichwirkende oder gleichartige Komponenten verwendet werden, jedoch mit dem Kleinbuchstaben "c" nachgestellt.

Diese Ausführungsform unterscheidet sich von der letztgenannten Ausführungsform gemäß Fig.6 und 7 dadurch, dass das Dämpfungselement 74c im Querschnitt T-profilartig ausgebildet ist, das heißt mit einem rohrförmigen Dämpfungskörper 68c im Stile der Ausführungsform gemäß Fig.6, jedoch mit lediglich einer Befestigungsscheibe 70c, die etwa in der Mitte des rohrförmigen Dämpfungskörpers 68c angeordnet und sich von dort nach radial außen zur Anbringung an den Befestigungsbolzen 40c und 42c erstreckt.

Sämtlichen Ausführungsformen ist jedoch gemein, dass das jeweilige Dämpfungselement an den Befestigungsbolzen angebracht ist und so einfacher montierbar und hinsichtlich der Positionierung über die Lebensdauer des Bremskraftverstärkers stabiler ist.

## Patentansprüche

1. Bremskraftverstärkungseinrichtung (10) für eine Fahrzeugbremsanlage mit:
- einem Krafteingangsglied (12),
- einer über das Krafteingangslied (12) betätigbaren Steuerventilanordnung (14),
- einer in einem Gehäuse (16) angeordneten Kammeranordnung (24), die eine Unterdruckkammer (20) und eine über eine bewegbare Wand (18) von der Unterdruckkammer (20) getrennte, wahlwelse mit einer Unterdruckquelle oder der Atmosphäre verbindbare Arbeitskammer (22) aufweist, und
- einem Kraftabgabeglied (34),
wobei die bewegliche Wand (18) mittels einer in dem Gehäuse (16) zumindest teilweise aufgenommenen Rückstellfeder (38) in eine Ausgangsstellung vorgespannt ist und wobei das Gehäuse (16) von wenigstens einem Befestigungsbolzen (40, 42) durchsetzt ist,
**gekennzeichnet durch** wenigstens ein Dämpfungselement (48, 50), das zur Schwingungsdämpfung an der Rückstellfeder (38) angreift, wobei das wenigstens eine Dämpfungselement (48, 50) an dem wenigstens einen Befestigungsbolzen angebracht ist.

2. Bremskraftverstärkungseinrichtung (10) nach Anspruch 1,
**dadurch gekennzeichnet, dass** das wenigstens eine Dämpfungselement (48, 50) an einem Umfangsbereich, vorzugsweise an einem Außenumfangsbereich, der Rückstellfeder (38) schwingungsdämpfend angreift.

3. Bremskraftverstärkungseinrichtung (10) nach Anspruch 1 oder 2,
**dadurch gekennzeichnet, dass** das wenigstens eine Dämpfungselement (48, 50) zylindrisch, vorzugsweise hohlzylindrisch, insbesondere becherförmig, ausgebildet ist.

4. Bremskraftverstärkungseinrichtung (10) nach einem der vorangehenden Ansprüche,
**dadurch gekennzeichnet, dass** eine Mehrzahl von Dämpfungselementen (48, 50) um den Außenumfang der Rückstellfeder (38) herum an einer korrespondierenden Mehrzahl von Befestigungsbolzen (40, 42) angeordnet ist.

5. Bremskraftverstärkungseinrichtung (10b, 10c) nach einem der vorangehenden Ansprüche,
**dadurch gekennzeichnet, dass** das wenigstens eine Dämpfungselement (66b; 74c) die Rückstellfeder (38b; 38c) über ihren gesamten Umfang umgibt.

6. Bremskraftverstärkungseinrichtung (10) nach einem der vorangehenden Ansprüche,
**dadurch gekennzeichnet, dass** das wenigstens eine Dämpfungselement (48, 50) sich zumindest entlang eines Teils der axialen Länge der Rückstellfeder (38) erstreckt.

7. Bremskraftverstärkungseinrichtung nach einem der vorangehenden Ansprüche,
**dadurch gekennzeichnet, dass** im Bereich der Enden der Rückstellfeder jeweils wenigstens ein Dämpfungselement angeordnet ist.

8. Bremskraftverstärkungseinrichtung (10) nach einem der vorangehenden Ansprüche,
**dadurch gekennzeichnet, dass** das wenigstens eine Dämpfungselement (48, 50) aus einem elastisch deformierbaren Material, insbesondere einem Gummi- oder Schaumstoffmaterial, hergestellt.

9. Bremskraftverstärkungseinrichtung (10) nach einem der vorangehenden Ansprüche,
**dadurch gekennzeichnet, dass** das wenigstens eine Dämpfungselement (58a) scheibenförmig ausgebildet ist und sich zwischen Windungen der Rückstellfeder (38a) hinein erstreckt.

10. Bremskraftverstärkungseinrichtung (10b; 10c) nach einem der Ansprüche 1 bis 8,
**dadurch gekennzeichnet, dass** das wenigstens eine Dämpfungselement (66b; 74c) einen zylindrischen Dämpfungskörper (68b; 68c) und wenigstens eine mit diesem verbundene Befestigungsscheibe (70b, 72b; 70c) aufweist.

11. Bremskraftverstärkungseinrichtung (10b) nach Anspruch 10,
**dadurch gekennzeichnet, dass** das wenigstens eine Dämpfungselement (66c) - in einem achsenthaltenden Schnitt betrachtet - ein U-Profil aufweist.

12. Bremskraftverstärkungseinrichtung (10c) nach Anspruch 10,
**dadurch gekennzeichnet, dass** das wenigstens eine Dämpfungselement (66c) - in einem achsenthaltenden Schnitt betrachtet - ein T-Profll aufweist.

## Claims

1. Brake booster device (10) for a vehicle brake system comprising:
- a force input element (12),
- a control valve arrangement (14) actuable via the force input element (12),
- a chamber arrangement (24) disposed in a housing (16) and comprising a vacuum chamber (20) and a working chamber (22), which is separated from the vacuum chamber (20) by a movable wall (18) and connectable selectively to a vacuum source or the atmosphere, and
- a force output element (34),
wherein the movable wall (18) is biased into a normal position by means of a resetting spring (38) accommodated at least partially in the housing (16) and wherein the housing (16) is penetrated by at least one fastening bolt (40, 42),
**characterized by** at least one damping element (48, 50), which acts for the purpose of vibration damping on the resetting spring (38), wherein the at least one damping element (48, 50) is mounted on the at least one fastening bolt.

2. Brake booster device (10) according to claim 1,
**characterized in that** the at least one damping element (48, 50) acts in a vibration-damping manner on a peripheral region, preferably on an outer peripheral region, of the resetting spring (38).

3. Brake booster device (10) according to claim 1 or 2,
**characterized in that** the at least one damping element (48, 50) is of a cylindrical, preferably hollow-cylindrical, in particular cup-shaped, design.

4. Brake booster device (10) according to one of the preceding claims, **characterized in that** a plurality of damping elements (48, 50) are disposed around the outer periphery of the resetting spring (38) on a corresponding plurality of fastening bolts (40, 42).

5. Brake booster device (10b, 10c) according to one of the preceding claims, **characterized in that** the at least one damping element (66b; 74c) surrounds the resetting spring (38b; 38c) over the entire periphery thereof.

6. Brake booster device (10) according to one of the preceding claims, **characterized in that** the at least one damping element (48, 50) extends at least along part of the axial length of the resetting spring (38).

7. Brake booster device according to one of the preceding claims, **characterized in that** in the region of the ends of the resetting spring in each case at least one damping element is disposed.

8. Brake booster device (10) according to one of the preceding claims, **characterized in that** the at least one damping element (48, 50) is manufactured from an elastically deformable material, in particular a rubber- or foam material.

9. Brake booster device (10) according to one of the preceding claims, **characterized in that** the at least one damping element (58a) is of a disk-shaped design and extends in between turns of the resetting spring (38a).

10. Brake booster device (10b; 10c) according to one of claims 1 to 8, **characterized in that** the at least one damping element (66b; 74c) comprises a cylindrical damping body (68b; 68c) and at least one fastening disk (70b, 72b; 70c) connected thereto.

11. Brake booster device (10b) according to claim 10,
**characterized in that** the at least one damping element (66c) - viewed in an axis-containing section - comprises a U-section.

12. Brake booster device (10c) according to claim 10,
**characterized in that** the at least one damping element (66c) - viewed in an axis-containing section - comprises a T-section.

## Revendications

1. Dispositif de servofrein (10) pour un système de freinage d'automobile, comprenant : .
- un organe d'entrée de force (12),
- un agencement de soupape de commande (14) pouvant être actionné par l'intermédiaire dudit organe d'entrée de force (12),
- un agencement de chambres (24) disposé dans un boîtier (16), lequel agencement présente une chambre de dépression (20) et une chambre de travail (22) séparée de la chambre de dépression (20) par une paroi mobile (18) et pouvant être reliée au choix à une source de dépression ou à l'atmosphère, et
- un organe de génération de force (34),
la paroi mobile (18) étant précontrainte dans une position de départ au moyen d'un ressort de rappel (38) logé au moins en partie dans le boîtier (16), et le boîtier (16) étant traversé par au moins un boulon de fixation (40, 42),
**caractérisé par** au moins un d'amortissement (48, 50) qui vient en prise avec le ressort de rappel (38) pour amortir les vibrations, ledit élément d'amortissement (48, 50) étant monté sur ledit boulon de fixation.

2. Dispositif de servofrein (10) selon la revendication 1,
**caractérisé en ce que** ledit élément d'amortissement (48, 50) vient en prise avec une zone circonférentielle, de préférence une zone circonférentielle extérieure, du ressort de rappel (38) de manière à amortir les vibrations.

3. Dispositif de servofrein (10) selon la revendication 1 ou 2,
**caractérisé en ce que** ledit élément d'amortissement (48, 50) est réalisé en forme de cylindre, de préférence en forme de cylindre creux, plus particulièrement en forme de gobelet.

4. Dispositif de servofrein (10) selon l'une des revendications précédentes, **caractérisé en ce qu'**une pluralité d'éléments d'amortissement (48, 50) est disposée autour de la circonférence extérieure du ressort de rappel (38) sur une pluralité de boulons de fixation (40, 42) correspondante.

5. Dispositif de servofrein (10b, 10c) selon l'une des revendications précédentes, **caractérisé en ce que** ledit élément d'amortissement (66b ; 74c) entoure le ressort de rappel (38b ; 38c) sur toute sa circonférence.

6. Dispositif de servofrein (10) selon l'une des revendications précédentes, **caractérisé en ce que** ledit élément d'amortissement (48, 50) s'étend au moins le long d'une partie de la longueur axiale du ressort de rappel (38).

7. Dispositif de servofrein selon l'une des revendications précédentes, **caractérisé en ce qu'**au moins un élément d'amortissement est disposé dans chaque zone d'extrémité du ressort de rappel

8. Dispositif de servofrein (10) selon l'une des revendications précédentes, **caractérisé en ce que** ledit élément d'amortissement (48, 50) est fabriqué à partir d'un matériau élastiquement déformable, plus particulièrement d'un matériau en caoutchouc ou en mousse.

9. Dispositif de servofrein (10) selon l'une des revendications précédentes, **caractérisé en ce que** ledit élément d'amortissement (58a) est réalisé en forme de disque et s'étend entre les spires du ressort de rappel (38a), vers l'intérieur de celles-ci.

10. Dispositif de servofrein (10b ; 10c) selon l'une des revendications 1 à 8, **caractérisé en ce que** ledit élément d'amortissement (66b ; 74c) présente un corps d'amortissement cylindrique (68b ; 68c) et au moins une rondelle de fixation (70b, 72b ; 70c) reliée à celui-ci.

11. Dispositif de servofrein (10b) selon la revendication 10,
**caractérisé en ce que** ledit élément d'amortissement (66c) - vu dans une coupe comprenant l'axe - présente un profil en U.

12. Dispositif de servofrein (10c) selon la revendication 10,
**caractérisé en ce que** ledit élément d'amortissement (66c) - vu dans une coupe comprenant l'axe - présente un profil en T.
